# EUROPEAN PATENT APPLICATION

(11) **EP 4 538 939 A1**
(43) Date of publication of application: **16.04.2025**
(21) Application number: 23819531.7
(22) Date of filing: 26.04.2023
(51) Int. Cl.: G06N 20/00, G06F 21/62

(54) **MODEL MANAGEMENT DEVICE, MODEL MANAGEMENT SYSTEM, AND MODEL MANAGEMENT METHOD**

(30) Priority: 09.06.2022 JP 2022093639
(71) Applicant: KONICA MINOLTA, INC., Tokyo 100-7015 (JP)
(72) Inventor: MIMURA, Yusuke, Chiyoda-ku, Tokyo 100-7015 (JP)
(74) Representative: Gille Hrabal Partnerschaftsgesellschaft mbB Patentanwälte
(86) International application number: PCT/JP2023/016453
(87) International publication number: WO 2023/238544

(57) **Abstract**

A technique for managing training data used to train a machine-learning model is disclosed. One aspect of the present disclosure relates to a model management device comprising: a data identifying unit that acquires data identifying information; a model identifying unit that, with reference to usage information of training data, identified a first machine-learning model which has been trained by using first training data identified by the data identifying information; and a processing unit that deletes the first training data from a first training data set used to train the first machine-learning model, and thereby creates a second training data set and executes processing the first machine-learning model.

## Description

### Technical Field

The present disclosure relates to a model management device, a model management system, and a model management method.

### Background Art

With the development of machine learning techniques such as deep learning, machine learning techniques have been widely used in various technical fields. In machine learning technology, it is generally known that the performance of a machine learning model can change depending on training data. It is also known that it is difficult to predict the change.

### Citation List

### Patent Literatures

PTL 1
   Japanese Unexamined Patent Publication No. 2020-102001
PTL 2
   Japanese Unexamined Patent Publication No. 2021-157313

### Summary of Invention

### Technical Problem

While it is considered important to manage which training data has been used to train a machine learning model as described above, a data management technique for managing association between a machine learning model and training data used to train the machine learning model has not received much attention in the related art.

In consideration of the above-described problem, one object of the present disclosure is to provide a technique for managing training data used for training a machine learning model.

### Solution to Problem

An aspect of the present disclosure relates to a model management device including: a data identifier that acquires data identification information; a model identifier that identifies, with reference to usage information of training data, a first machine learning model trained by using first training data identified by the data identification information; and a processor that creates a second training data set by deleting the first training data from a first training data set used for training the first machine learning model, and executes a process on the first machine learning model.

### Advantageous Effects of Invention

According to the present disclosure, there is provided a technique for managing training datasets used to train a machine learning model such as and the like.

### Brief Description of the Drawings.

Fig. 1 is a schematic diagram illustrating a model management system according to an embodiment of the present disclosure;
Fig. 2 is a block diagram illustrating a hardware configuration of a model management device according to an embodiment of the present disclosure;
Fig. 3 is a block diagram illustrating a functional configuration of a model management device according to an example of the present disclosure;
Fig. 4 is a diagram illustrating detailed information of training data according to an embodiment of the present disclosure;
Fig. 5 is a diagram illustrating usage information according to an embodiment of the present disclosure;
Fig. 6 is a flowchart illustrating model management processing according to an embodiment of the present disclosure; and
Fig. 7 is a schematic diagram illustrating a model management system according to another embodiment of the present disclosure.

### Description of Embodiments

The following explains an embodiment of the present disclosure with reference to the drawings.

In the following embodiments, a model management device for managing training data used to train a machine learning model is disclosed.

In embodiments described later, for example, a model management device is disclosed that is capable of coping with a case where, during operation of a machine learning model trained by using a training data set, it is found that there is a problem with quality of part or all of training data in the training data set.

For example, a problem with the training data may be considered in terms of the performance of the machine learning model. In one example, for example, there may be a case where, after the training of a machine learning model, it is found that, among training data sets used to train the machine learning model, the acquisition method for training data at a given facility is inappropriate or has been forged. In this case, the training data obtained at the facility may be inadequate and degrade the performance of the machine learning model. Therefore, use of training data acquired at the facility needs to be avoided, and a machine learning model trained with a training data set including inappropriate training data is preferably retrained.

As another example, there is a case where the performance is degraded because the environment at the time of data acquisition is different from the environment at the time of operation. For example, since the lifestyle, behavior, and the like of people have changed before and after the COVID-19 pandemic, the training dataset acquired before the COVID-19 pandemic may not be appropriate for the system operated after the COVID-19 pandemic. In this case, the training dataset acquired before the COVID-19 pandemic is inappropriate, which may degrade the performances of the machine learning model. Therefore, such use of training dataset acquired before the COVID-19 pandemic needs to be avoided, and a machine learning model trained with a training dataset including inappropriate training dataset is preferably retrained.

As still another example, for example, there may be a case where it is found after the training of the machine learning model that an annotation (a note, a label, or the like) created by a certain vendor has poor quality. In this case, the training data annotated by the vendor may be inappropriate and degrade the performance of the machine learning model. Therefore, the use of the training data annotated by the vendor needs to be avoided, and a machine learning model trained by a training data set including inappropriate training data is preferably retrained.

That is, the quality of training data used to train the machine learning model needs to be determined, and data that does not satisfy a criterion, is suspicious, or is different from a current environment is not used for training in terms of the performance of the machine learning model.

Alternatively, issues from a legal and/or ethical point of view may be considered for the training data. As an example, for example, there may be a case where it is found after training of a machine learning model that training data for which commercial use is not permitted or licensed, or for which commercial use was previously permitted or licensed, but for which permission or license has subsequently become invalid, has been used to train a commercial machine learning model. In this case, from a contractual perspective, use of training data that is not permitted or licensed should be avoided, and it is desirable that a machine learning model that has been trained with a training data set that includes the above-mentioned training data be retrained.

As another example, for example, a case is conceivable in which training data of an individual who has not permitted the use of data or who has previously permitted the use of data but has subsequently offered to cancel the permission has been used to train the machine learning model. In this case, in terms of personal information protection and/or laws and regulations related to personal information protection, use of training data including personal information for which data use is not permitted needs to be avoided, and it is desirable that a machine learning model trained with a training data set including the training data be retrained.

Another example may be, for example, a case where training data including age and/or gender is used to train a machine learning model when developing Artificial Intelligence (AI) for recruitment. In this case, from an ethical point of view, the use of training data including age and/or gender needs to be avoided, and it is desirable that a machine learning model trained by a training data set including the training data is retrained by a data set excluding inappropriate data.

### Outlines

In summary of the present disclosure, when it is found that such inappropriate training data is used to train the machine learning model, the model management device according to an embodiment of the present disclosure may identify the machine learning model trained by using the inappropriate training data, delete the inappropriate training data from the training data set, and retrain the identified machine learning model by using the training data set that does not include the inappropriate training data.

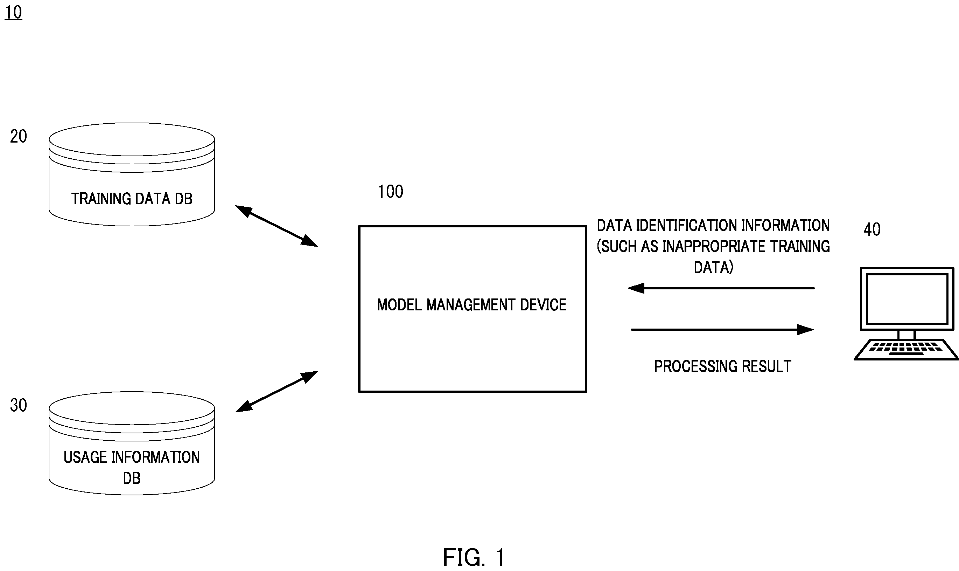

As illustrated in Fig. 1, a model management system 10 according to the following embodimentincludes a training data database (DB) 20, a usage information database (DB) 30, a terminal 40, and a model management device 100.

The training data DB 20 stores training dataset. For example, the training dataset DB 20 may store training datasets used to train one or more machine learning models managed by the model management device 100. For example, the training data DB 20 may store, in association with the training data, detailed information such as an acquisition location, an acquisition time, annotation information, license information, personal information protection, and ethics information of each training data.

The usage information DB 30 stores usage information of the training data. Here, the usage information may indicate an association between a machine learning model and training data used to train the machine learning model. To be more specific, the usage information DB 30 stores usage information indicating the status of use of training dataset for one or more machine learning models managed by the model management device 100. For example, the usage information DB 30 may store, in association with each machine learning model managed by the model management device 100, specifying information of training dataset used for training the machine learning model.

The terminal 40 may be a personal computer (PC), a tablet, a smartphone, or the like, and may be operated by a user such as an administrator of the machine learning model. The terminal 40 is connected to the model management device 100 in a wired or wireless manner, and a user can cause the model management device 100 to execute various processes to be described later by operating the terminal 40. In addition, the terminal 40 may receive data identification information such as specifying information for specifying inappropriate data from the user and provide the data identification information to the model management device 100.

Upon acquiring the data identification information identifying, for example, inappropriate training dataset from the terminal 40, the model management device 100 refers to the usage information of the training dataset stored in the usage information DB 30 and identifies a machine learning model trained with the training dataset identified by the data identification information. The model management device 100 then updates the training dataset by deleting the identified training dataset from the training dataset stored in the training dataset DB 20 used to train the identified machine learning model, executes processing for the identified machine learning model (e.g., retraining the machine learning model with the updated training dataset), and reports the processing result to the terminal 40.

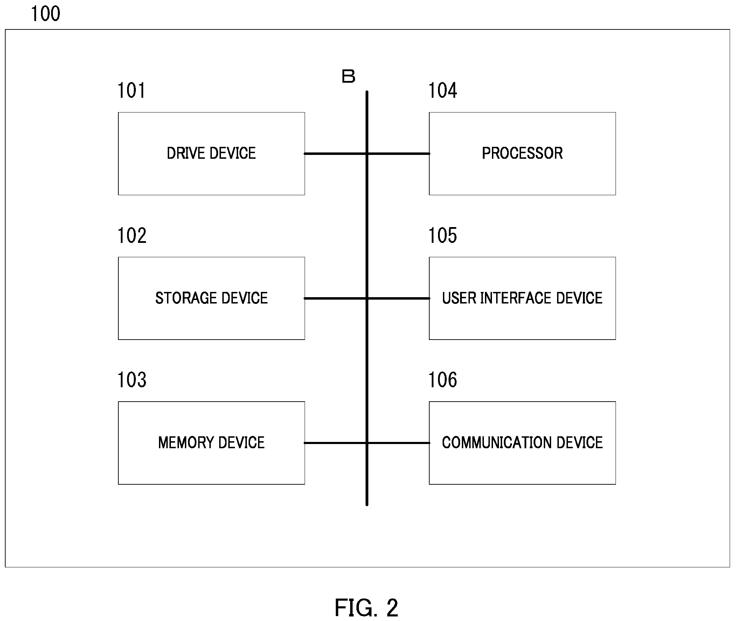

Here, the model management device 100 may be implemented by a computing device such as a server, a personal computer (PC), a smartphone, or a tablet, and may have, for example, a hardware configuration as illustrated in Fig. 2. That is, the model management device 100 includes a drive device 101, a storage device 102, a memory device 103, a processor 104, a user interface (UI) device 105, and a communication device 106 that are connected to each other via a bus B.

A program or an instruction for realizing various functions and processes described later in the model management device 100 may be stored in a detachable storage medium such as a Compact Disk -Read Only Memory (CD-ROM) or a flash memory. When the storage medium is set in the drive device 101, the program or the instruction is installed in the storage device 102 or the memory device 103 from the storage medium via the drive device 101. Note that the program or the instructions do not necessarily have to be installed from the storage medium, but may be downloaded from any external device via a network or the like.

The storage device 102 is implemented by a hard disk drive or the like, and stores, together with an installed program or instruction, a file, data, or the like used for execution of the program or instruction.

The memory device 103 is realized by a random access memory, a static memory, or the like, and when a program or an instruction is activated, reads the program, the instruction, data, or the like from the storage device 102 and stores the read program, instruction, data, or the like. The storage device 102, the memory device 103, and the removable storage media may be collectively referred to as non-transitory tangible storage media (non-transitory tangible storage medium).

The processor 104 may be implemented by one or more central processors (CPUs), graphics processors (GPUs), processing circuits (processing circuitry), or the like, which may include one or more processor cores, and executes various functions and processes of the model management device 100, which will be described later, according to programs and instructions stored in the memory device 103 and parameters necessary for executing the programs and instructions.

The user interface (UI) device 105 may include an input device such as a keyboard, a mouse, a camera, or a microphone, an output device such as a display, a speaker, a headset, or a printer, and an input/output device such as a touch panel, and implements an interface between a user and the model management device 100. For example, the user operates the model management device 100 by operating a Graphical User Interface (GUI) displayed on a display or a touch panel with a keyboard, a mouse, or the like.

The communication device 106 is realized by various communication circuits that execute wired and/or wireless communication processing with an external device or a communication network such as the Internet, a Local Area Network (LAN), or a cellular network.

However, the above-described hardware configuration is merely an example, and the model management device 100 according to the present disclosure may be implemented by any other appropriate hardware configuration.

### Model Management Device

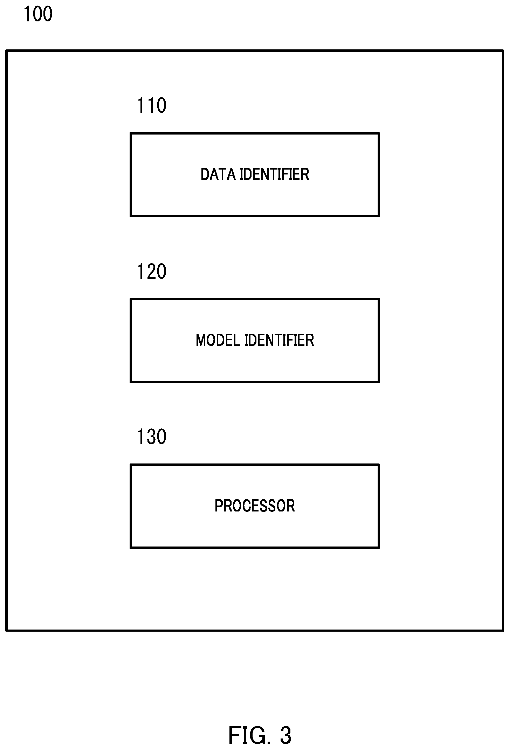

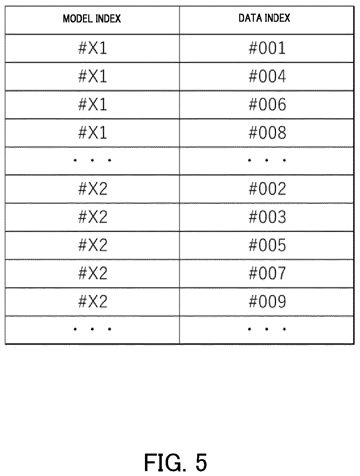

Next, the model management device 100 according to an embodiment of the present disclosure will be described with reference to Figs. 3 to 5. The model management device 100 according to the present embodiment may refer to the usage information of the training data, identify the machine learning model trained with the training data identified by the data identification information, delete the identified training data from the training data set used for training the identified machine learning model, and perform processing (e.g., retraining) on the machine learning model with the updated training data set.

Fig. 3 is a block diagram illustrating a functional configuration of a model management device 100 according to an embodiment of the present disclosure. As illustrated in Fig. 3, the model management device 100 includes a data identifier 110, a model identifier 120, and a processor 130. For example, one or more functional units of the data identifier 110, the model identifier 120, and the processor 130 may be implemented by one or more processors 104 executing one or more programs or instructions stored in a non-transitory tangible storage medium such as the storage device 102 and/or the memory device 103.

The data identifier 110 acquires data identification information. To be more specific, upon acquiring specifying information identifying the training dataset from the terminals 40 or the like, the dataset identifier 110 identifies, based on the acquired specifying information, the training dataset corresponding to the specifying information from the training dataset stored in the training dataset DB 20.

For example, the data identification information may indicate training data that has been used to train a machine learning model managed by the model management device 100 but has been found to be inappropriate data after the training. Specifically, the data identification information may be indicative of training data for which the use of the above-mentioned training data is likely to degrade the performance of the machine learning model. For example, such training dataset may be a training dataset acquired by an inappropriate COVID-19 pandemic method, a forged training dataset, a training dataset acquired before acquisition, a training dataset annotated by an unscrupulous vendor, etc. Further, the data identification information may indicate training data which may become a problem from a legal and/or ethical point of view by using the training data. For example, such training data, training data that is not permitted or licensed for commercial use, previously permitted or licensed, training data for which a permission or license has subsequently become invalid, training data related to individuals not permitted to use the data, although previously permitted data use, training data relating to an individual who has made an offer to subsequently revoke permission, training data including age and/or sex, and the like may be mentioned.

The data identification information may be specifying information for identifying individual training data, but is not limited thereto. For example, the data identification information may be provided in the form of a data identification condition for identifying or extracting a plurality of pieces of training data stored in the training data DB 20 (e.g., indicating a specific acquisition location, acquisition time, annotation provider, etc). Upon acquiring such data identification conditions from the terminals 40, the data identifier 110 may identify, in the training data DB 20, a training data set that satisfies the acquired data identification conditions.

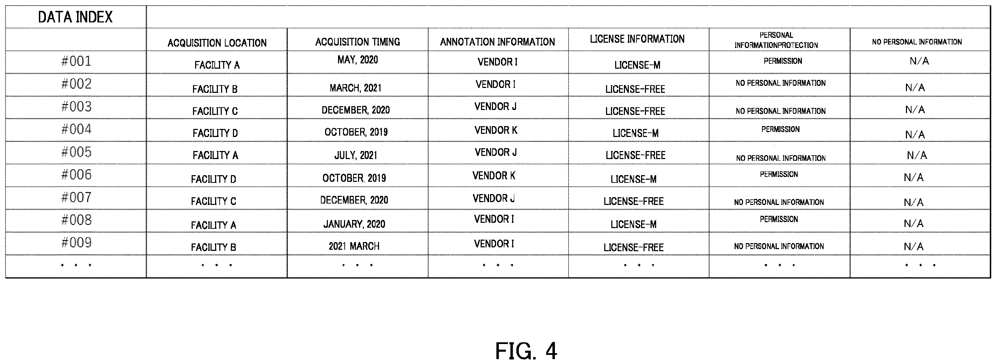

For example, in a case where the training data DB 20 holds detailed information on each training dataset as illustrated in Fig. 4, the data identifier 110 may search for a training dataset satisfying a data identification condition and extract the detected training dataset as a training dataset satisfying the data identification condition. For example, when the data identification condition is the acquisition location "facility A", the data identifier 110 may extract the training data #001, #005, and #008 corresponding to the acquisition location "facility A". Further, when the data identification condition is the personal information protection "permission", the data identifier 110 may extract the training data #001, #004, #006, and #008 corresponding to the personal information protection "permission".

The model identifier 120 refers to the usage information of the training data, and identifies a machine learning model trained using the training data identified by the data identification information. In particular, when a training dataset corresponding to the dataset identification information acquired from the terminal 40 or the like is identified, the model identifier 120 accesses the usage information stored in the usage information DB 30 and identifies a machine learning model trained using the identified training dataset.

For example, the usage information may have a data structure in a table format as shown in Fig. 4, and for example, may have two columns of "model index" and "data index". The "model index" specifies the machine learning models #X1, #X2, ... managed by the model management device 100. In addition, the "date index" identifies the training datasets #001, #002, and #*** stored in the training dataset DB 20, and indicates a training dataset used to train each machine learning model.

For example, when the training dataset #001 is identified by the dataset identification information, the model identifier 120 may refer to the usage information and identify the model index #X1 corresponding to the dataset index #001. Furthermore, when the training dataset #002 is identified by the dataset identification information, the model identifier 120 may identify the model index #X2 corresponding to the dataset index #002 with reference to the usage information.

The processor 130 creates a new training data set by deleting the training data identified by the data identification information from the training data set used to train the machine learning model, and executes processing on the machine learning model. Specifically, upon identification of a machine learning model trained using the training data identified by the acquired data identification information, the processor 130 may delete the identified training data from the training data set used to train the identified machine learning model and update the training data set with the remaining training data. Then, the processor 130 may perform processing on the machine learning model based on the updated training data set, for example, retrain the machine learning model by using the updated training data set.

For example, as described above, when the training dataset #001 is determined to be inappropriate, the processor 130 may delete the training dataset #001 from the training datasets #001, #004, #006, #008, ... used to train the machine learning model #X1, and retrain the machine learning model #1 with the updated training datasets #004, #006, #008, .... Similarly, if the training dataset #002 is identified as inappropriate, the processor 130 may delete the training dataset #002 from the training datasets #002, #003, #005, #007, #009, ... used to train the machine learning model #X2, and retrain the machine learning model #2 with the updated training datasets #003, #005, #007, #009, ....

Furthermore, the processor 130 may delete the training dataset identified by the dataset identification information from the training dataset DB 20, or may make the training dataset unusable. Accordingly, it is possible to avoid the use of the unusable training data, and it is possible to release the storage area secured for the unusable training data.

The processor 130 may also determine whether a machine learning model is usable at a given time point. To be more specific, upon acquiring data identification information indicating the expiration date of the training dataset, such as when the license M expires, the data identifier 110 refers to the detailed information of the training dataset DB 20, and specifies the training datasets #001, #004, #006, and #008 having "license M" as the license information. The identified training data #001, #004, #006, and #008 become unusable after the expiration date, and therefore the processor 130 may determine that the machine learning model trained by using the training data #001, #004, #006, and #008 becomes inoperable after the expiration date of the license M. In this case, the processor 130 may retrain the machine learning model with the training data set from which the training data #001, #004, #006, and #008 have been deleted, and use the retrained machine learning model after the expiration date of the license M. Accordingly, it is possible to appropriately manage the operation of the machine learning model in accordance with the expiration date of the license.

According to the present embodiment, a machine learning model trained using training data identified as inappropriate data can be retrained using a training data set from which the inappropriate data has been deleted, and a machine learning model suitable not only from the viewpoint of the performance of the machine learning model but also from the viewpoint of legal and/or ethical considerations can be reacquired.

### Model Management Processing

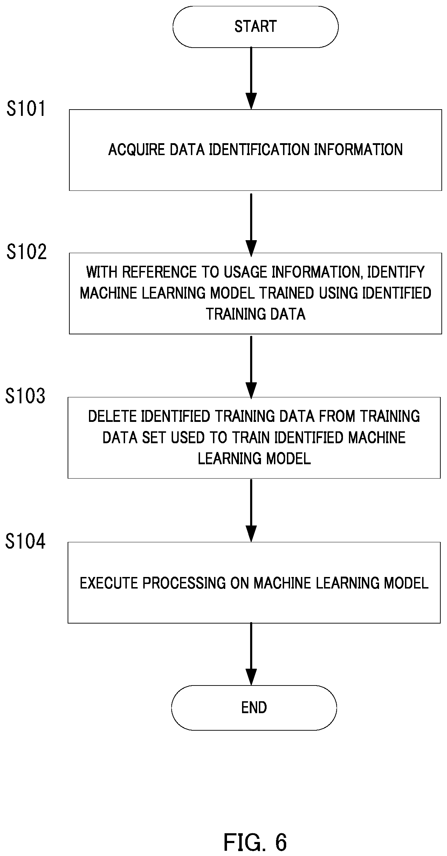

Next, model management processing according to an embodiment of the present disclosure will be described with reference to Fig. 6. The model management process may be performed by the above-described model management device 100, and more specifically, may be implemented by one or more processors 104 of the model management device 100 executing one or more programs or instructions stored in one or more memory devices 103. Fig. 6 is a flowchart illustrating model management processing according to an example of the present disclosure.

As illustrated in Fig. 6, in step S101, the model management device 100 acquires data identification information. Specifically, the model management device 100 may acquire data identification information identifying one or more pieces of inappropriate training data from the user via the terminal 40 or the like. For example, the data identification information may be specifying information that specifies the training data, or may be a data identification condition that identifies one or more training data. For example, when the data identification condition that "the acquisition location is the facility A" is provided, the model management device 100 may refer to the detailed information of the training dataset DB 20 and specify the training datasets #001, #005, and #008 corresponding to the "acquisition location" of "the facility A".

In step S102, the model management device 100 refers to the usage information to identify a machine learning model trained using the identified training dataset. To be more specific, the model management device 100 may refer to the usage information stored in the usage information DB 30 to identify the machine learning model trained using each of the training datasets identified in step S101. For example, the model management device 100 may identify two machine learning models #X1 and #X2 as machine learning models trained using the training datasets #001, #005, and #008.

In step S103, the model management device 100 deletes the identified training dataset from the training dataset used for training the identified machine learning model. For example, when the machine learning models #S102 and #X2 are identified in step X1, the model management device 100 identifies the training datasets #X1 = {#001, #004, #006, #008, ...} and #X2 = {#002, #003, #005, #007, #009, ...} used to train the machine learning models #TD1 and #TD2, respectively. Then, the model management device 100 deletes the training datasets #001, #005, and #008 from the training datasets #TD1 and #TD #2, and creates #TD1_deleted= {#004, #006, ...} and #TD2_deleted= {#002, #003, #007, #009, ...}.

In step S104, the model management device 100 executes processing for the machine learning model. For example, the model management device 100 may use #TD1_deleted= {#004, #006, ...} and #TD2_deleted= {#002, #003, #007, #009, ...} to retrain the machine learning models #X1 and #X2, respectively.

According to the present embodiment, a machine learning model trained using training data identified as inappropriate data can be retrained using a training data set from which the inappropriate data has been deleted, and a machine learning model suitable not only from the viewpoint of the performance of the machine learning model but also from the viewpoint of legal and/or ethical considerations can be reacquired.

### Variations

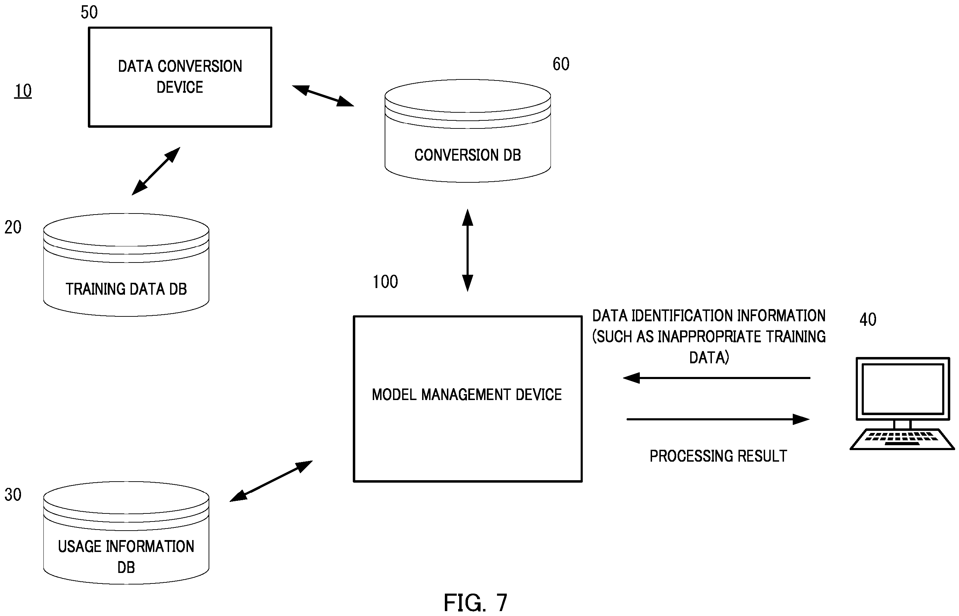

Next, a model management system 10 according to another embodiment of the present disclosure will be described with reference to Fig. 7. The model management system 10 according to the present embodiment further includes a data conversion device 50 and a conversion database (DB) 60.

A data conversion device 50 executes data conversion for deleting or concealing personal information from training data including the personal information stored in training data DB 20, and stores the converted training data in conversion DB 60.

A conversion DB 60 stores training data converted by a data conversion device 50 so as to conceal or delete personal information from data. The model management device 100 may train the machine learning model by using the converted training dataset stored in the conversion DB 20 instead of the training dataset stored in the training dataset DB 60. As a result, the model management device 100 can train a machine learning model using training data that does not include personal information. Note that the conversion DB 60 may store the detailed information of each training data stored in the training data DB 20 in association with the converted training data.

In the model management system 10 according to the present example, upon acquisition of the data identification information identifying inappropriate data, the data identifier 110 identifies the inappropriate training data identified by the data identification information, and the model identifier 120 refers to the usage information and identifies a machine learning model trained using the identified inappropriate training data. Then, the processor 130 identifies the converted training dataset used for training the identified machine learning model in the conversion DB 60, and deletes the inappropriate training dataset from the identified converted training dataset. Furthermore, the processor 130 may retrain the machine learning model by using the converted training data set from which the inappropriate training data has been deleted.

According to this example, data conversion is performed to delete or conceal personal information from training data including the personal information, and the converted training data is used to train a machine learning model. Even when inappropriate training data is found during the operation of the machine learning model, the inappropriate training data can be deleted, and the machine learning model can be retrained using training data that does not include updated personal information.

With respect to the above description, the following supplementary notes are further disclosed.

### (Supplementary Note 1)

A model management device including: a data identifier that acquires data identification information; a model identifier that identifies, with reference to usage information of training data, a first machine learning model trained by using first training data identified by the data identification information; and a processor that creates a second training data set by deleting the first training data from a first training data set used for training the first machine learning model, and executes a process on the first machine learning model.

### (Supplementary Note 2)

The model management device of Supplementary Note 1, in which the usage information indicates an association between a machine learning model and training data used to train the machine learning model.

### (Supplementary Note 3)

The model management device according to Supplementary Note 1 or 2, in which the training data is associated with one or more of an acquisition location, an acquisition time, annotation information, license information, personal information protection, and ethics information.

### (Supplementary Note 4)

The model management device according to according to any one of Supplementary Notes 1 to 3, in which the processor retrains the first machine learning model by using the second training data set.

### (Supplementary Note 5)

The model management device according to any one of Supplementary Notes 1 to 4, in which the training data is generated by concealing or deleting personal information from data.

### (Supplementary Note 6)

The model management device according to any one of Supplementary Notes 1 to 5, in which the processor determines whether the first machine learning model is usable at a given time point.

### (Supplementary Note 7)

A model management system including: a training data database (DB) that stores training data; a usage information database (DB) that stores usage information of the training data; and a model management device communicably connected to the training data DB and the usage information DB, in which the model management device further includes: a data identifier that acquires data identification information; a model identifier that identifies, with reference to usage information, a first machine learning model trained by using first training data identified by the data identification information; and a processor that creates a second training data set by deleting the first training data from a first training data set used for training the first machine learning model, and executes a process on the first machine learning model.

### (Supplementary Note 8)

A model management method that is executed by a computer, the method including: acquiring data identification information; identifying, with reference to usage information of training data, a first machine learning model trained by using first training data identified by the data identification information; and creating a second training data set by deleting the first training data from a first training data set used for training the first machine learning model, and executing a process on the first machine learning model.

Although the examples of the present disclosure have been described in detail above, the present disclosure is not limited to the above-described specific embodiments, and various modifications and changes can be made within the scope of the gist of the present disclosure described in the claims.

The disclosures of the specification, drawings and abstract contained in the Japanese Patent Application No. 2022-093639 Japanese application filed on Jun. 9, 2022 are incorporated herein by reference in their entirety.

### Industrial Applicability

10 Model management system
20 Training data DB
30 Usage information DB
40 Terminal
50 Data conversion device
60 Conversion DB
100 Model conversion device
110 Data identifier
120 Model identifier
130 Processor

## Claims

1. A model management device comprising:
a data identifier that acquires data identification information;
a model identifier that identifies, with reference to usage information of training data, a first machine learning model trained by using first training data identified by the data identification information; and
a processor that creates a second training data set by deleting the first training data from a first training data set used for training the first machine learning model, and executes a process on the first machine learning model.

2. The model management device according to claim 1, wherein the usage information indicates an association between a machine learning model and training data used to train the machine learning model.

3. The model management device according to claim 1, wherein the training data is associated with one or more of an acquisition location, an acquisition time, annotation information, license information, personal information protection, and ethics information.

4. The model management device according to claim 1, wherein the processor retrains the first machine learning model by using the second training data set.

5. The model management device according to claim 1, wherein the training data is generated by concealing or deleting personal information from data.

6. The model management device according to claim 1, wherein the processor determines whether the first machine learning model is usable at a given time point.

7. A model management system comprising:
a training data database (DB) that stores training data;
a usage information database (DB) that stores usage information of the training data; and
a model management device communicably connected to the training data DB and the usage information DB, wherein
the model management device further includes:
a data identifier that acquires data identification information;
a model identifier that identifies, with reference to usage information, a first machine learning model trained by using first training data identified by the data identification information; and
a processor that creates a second training data set by deleting the first training data from a first training data set used for training the first machine learning model, and executes a process on the first machine learning model.

8. A model management method that is executed by a computer, the method comprising:
acquiring data identification information;
identifying, with reference to usage information of training data, a first machine learning model trained by using first training data identified by the data identification information; and
creating a second training data set by deleting the first training data from a first training data set used for training the first machine learning model, and executing a process on the first machine learning model.
